# EUROPÄISCHE PATENTSCHRIFT

(11) **EP 1 951 841 B1**
(45) Veröffentlichungstag und Bekanntmachung des Hinweises auf die Patenterteilung: **26.05.2010**
(21) Anmeldenummer: 06828894.3
(22) Anmeldetag: 31.10.2006
(51) Int. Cl.: C09K 8/52

(54) **VERWENDUNG VON PYROGLUTAMINSÄUREESTERN ALS GASHYDRATINHIBITOREN MIT VERBESSERTER BIOLOGISCHER ABBAUBARKEIT**
USE OF PYROGLUTAMIC ACID ESTERS AS GAS HYDRATE INHIBITORS WITH IMPROVED BIODEGRADABILITY
UTILISATION D'ESTERS D'ACIDE PYROGLUTAMIQUE COMME INHIBITEURS D'HYDRATES DE GAZ, A BIODEGRADABILITE AMELIOREE

(30) Priorität: 12.11.2005 DE 102005054037
(43) Veröffentlichungstag der Anmeldung: 06.08.2008
(73) Patentinhaber: Clariant Produkte (Deutschland) GmbH, 65929 Frankfurt am Main (DE)
(72) Erfinder: LEINWEBER, Dirk, 65824 Schwalbach (DE); FEUSTEL, Michael, 55278 Köngernheim (DE)
(74) Vertreter: Mikulecky, Klaus
(86) Internationale Anmeldenummer: PCT/EP2006/010455
(87) Internationale Veröffentlichungsnummer: WO 2007/054226

(56) Entgegenhaltungen:
- WO-A-94/12761
- WO-A2-2004/039314
- US-A- 5 244 878

## Beschreibung

Die vorliegende Erfindung betrifft die Verwendung von Pyroglutaminsäureestern als Gashydratinhibitoren sowie ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der Pyroglutaminsäureester enthält.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gastmolekülen stabilisiert. Diese eisähnlichen Verbindungen können in Abhängigkeit von Druck und Gaszusammensetzung auch über den Gefrierpunkt von Wasser (bis über 25°C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt. Außerdem kann die Gashydratbildung auch beim Bohrvorgang zur Erschließung neuer Gas- oder Erdöllagerstätten bei entsprechenden Druck- und Temperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der Wasserphase) niederen Alkoholen, wie Methanol, Glykol, oder Diethylenglykol unterdrückt werden. Der Zusatz dieser Additive bewirkt, dass die thermodynamische Grenze der Gashydratbildung zu niedrigeren Temperaturen und höheren Drücken hin verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen < 2 % zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Antiagglomerants). Die dabei eingesetzten Inhibitoren behindern entweder die Keimbildung und/oder das Wachstum der Gashydratpartikel, oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Antiagglomerants darstellen. Von besonderer Bedeutung sind hierbei Polymere mit Kohlenstoff-Backbone, die in den Seitengruppen sowohl cyclische (Pyrrolidon- oder Caprolactamreste) als auch acyclische Amidstrukturen enthalten.

So wird in WO-94/12761 ein Verfahren zur kinetischen Inhibierung der Gashydratbildung durch die Verwendung von Polyvinyllactamen mit einem Molekulargewicht von Mw > 40.000 D, und in WO-93/25798 wird ein solches Verfahren unter Verwendung von Polymeren und/oder Copolymeren des Vinylpyrrolidons mit einem Molekulargewicht von M_{w} > 5.000 bis 40.000 D offenbart.

EP-A-0 896 123 offenbart Gashydratinhibitoren, die Copolymere aus alkoxyliertes Methacrylsäure ohne Alkyl-Endverschluss und cyclischen N-Vinylverbindungen enthalten können.

In US-5 244 878 wird ein Verfahren zum Verzögern der Bildung oder Vermindern der Bildungstendenz von Gashydraten beschrieben. Hierzu werden Polyole verwendet, die mit Fettsäuren oder Alkenylbernsteinsäureanhydriden verestert werden. Die hergestellten Verbindungen weisen keine Aminosäurefunktionen auf, die mit Clathraten (Käfigmolekülen) interagieren könnten.

Die beschriebenen Additive besitzen nur eingeschränkte Wirksamkeit als kinetische Gashydratinhibitoren und/oder Antiagglomerants, müssen mit Co-Additiven verwendet werden, oder sind nicht in ausreichender Menge oder nur zu hohen Preisen erhältlich.

Um Gashydratinhibitoren auch bei stärkerer Unterkühlung als derzeit möglich, d.h. weiter innerhalb der Hydratregion einsetzen zu können, bedarf es einer weiteren Wirkungssteigerung im Vergleich zu den Hydratinhibitoren des Standes der Technik. Zusätzlich sind in Bezug auf ihre biologische Abbaubarkeit verbesserte Produkte erwünscht.

Aufgabe der vorliegenden Erfindung war es also, Additive zu finden, die sowohl die Bildung von Gashydraten verlangsamen (kinetische Inhibitoren) als auch Gashydratagglomerate klein und pumpbar halten (Antiagglomerants), um so ein breites Anwendungsspektrum mit hohem Wirkpotential zu gewährleisten. Des Weiteren sollten sie in der Lage sein, die derzeit verwendeten thermodynamischen Inhibitoren (Methanol und Glykole), die beträchtliche Sicherheitsprobleme und Logistikprobleme verursachen, zu ersetzen.

Da derzeit verwendete Inhibitoren wie Polyvinylpyrrolidon und Polyvinylcaprolactam nur eine mäßige biologische Abbaubarkeit aufweisen, sollten die erfindungsgemäßen Verbindungen zudem eine verbesserte biologische Abbaubarkeit aufweisen.

Wie nun überraschenderweise gefunden wurde, eignen sich sowohl wasserlösliche als auch öllösliche Pyroglutaminsäureester als Gashydratinhibitoren. Diese Ester können je nach Struktur sowohl die Keimbildung und das Wachstum von Gashydraten verzögern (kinetische Gashydratinhibitoren) als auch die Agglomeration von Gashydraten unterdrücken (Antiagglomerants). Zudem weisen die erfindungsgemäßen Verbindungen eine deutlich verbesserte biologische Abbaubarkeit auf.

Gegenstand der Erfindung ist daher die Verwendung von Pyroglutaminsäureester, darstellbar durch Veresterung von mindestens einem Alkohol mit 1 bis 100 Hydroxylgruppen mit Pyroglutaminsäure und/oder Glutaminsäure, mit der Maßgabe, dass der Alkohol höchstens eine Estergruppe oder höchstens eine Carbonsäuregruppe umfasst, in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

Ein weiterer Gegenstand der Erfindung ist ein Verfahren zur Inhibierung der Bildung von Gashydraten, indem einer mit einer gasförmigen, flüssigen oder festen organischen Phase in Verbindung stehenden wässrigen Phase, in der die Gashydratbildung verhindert werden soll, Pyroglutaminsäureester, darstellbar durch Veresterung von mindestens einem Alkohol mit 1 bis 100 Hydroxylgruppen mit Pyroglutaminsäure und/oder Glutaminsäure, mit der Maßgabe, dass der Alkohol höchstens eine Estergruppe oder höchstens eine Carbonsäuregruppe umfasst, in Mengen von 0,01 bis 2 Gew.-% zusetzt.

Der Alkohol entspricht vorzugsweise der Formel (1) 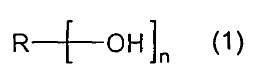 worin R für einen beliebig substituierten organischen Rest steht, der höchstens eine Estergruppe oder höchstens eine Carbonsäuregruppe umfasst. Damit ist gemeint, dass R entweder eine Estergruppe oder eine Carbonsäuregruppe oder weder eine Estergruppe noch eine Carbonsäuregruppe umfasst. Abgesehen davon kann R beliebige weitere Substituenten umfassen, beispielsweise Amino- oder Amidosubstituenten. R steht besonders bevorzugt für einen Alkyl- oder Polyalkylenoxid-Rest mit 1 bis 30 Kohlenstoffatomen. n steht vorzugsweise für eine Zahl von 1 bis 100, insbesondere 2 bis 80, speziell 3 bis 10.

Besonders bevorzugte Alkohole der Formel (1) sind Methanol, Ethanol, Propanol, Butanol, Pentanol, Isopropanol, Isobutanol, Isopentanol, 2-Ethylhexanol, Heptanol, Octanol, Decanol, Ethylenglykol, Propylenglykol, Glycerin, Diglycerin, Triglycerin, Tetraglycerin, Polyglycerin, Trimethylolpropan, Pentaerythrit, Dipentaerythrit, Tripentaerythrit, Sorbitol, Sorbitan, Diethylenglykol, Triethylenglykol, Propylenglykol, Dipropylenglykol und Tripropylenglykol.

Pyroglutaminsäure entspricht der Formel (2), Glutaminsäure der Formel (3):

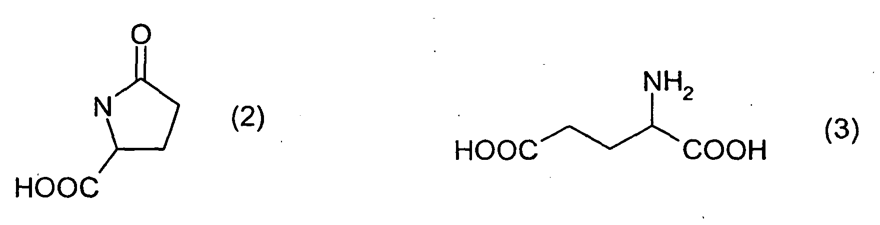

In den aus Alkohol und den Säuren der Formeln 2 und/oder 3 gebildeten Estern sind bevorzugt mindestens 30%, besonders bevorzugt mindestens 50% aller im Alkohol vorhandenen OH-Funktionen verestert.

Die erfindungsgemäßen Pyroglutaminsäureester sind durch Veresterung von enantiomerenreiner oder racemischer Pyroglutaminsäure oder Glutaminsäure, vorzugsweise L-Glutaminsäure, mit mindestens einem Alkohol darstellbar. Die Herstellung der erfindungsgemäßen Ester erfolgt durch unkatalysierte oder sauer katalysierte Kondensation der Pyroglutaminsäure oder Glutaminsäure mit dem Alkohol. Die Reaktionstemperatur liegt im Allgemeinen zwischen 100 und 300°C, vorzugsweise bei 170 bis 250°C.

Das bei der Veresterung zur Anwendung kommende molare Verhältnis von OH-Gruppen im Alkohol zur Pyroglutaminsäure oder Glutaminsäure liegt vorzugsweise zwischen 1 : 0,3 und 1 : 1, insbesondere zwischen 1 : 0,5 und 1 : 1.

Die Reaktion kann bei Atmosphärendruck oder vermindertem Druck durchgeführt werden. Als katalysierende Säuren sind beispielsweise HCl, H₂SO₄, Sulfonsäuren, H₃PO₄ oder saure Ionentauscher zu nennen, die in Mengen von 0,1 bis 5 Gew.-%, bezogen auf das Gewicht des Reaktionsgemisches, verwendet werden. Die Veresterung nimmt im Allgemeinen 3 bis 30 Stunden in Anspruch.

Zur Herstellung der erfindungsgemäßen Pyroglutaminsäureester kann neben Pyroglutaminsäure auch Glutaminsäure verwendet werden, welche direkt zum Pyroglutaminsäureester umgesetzt wird. Dementsprechend werden dann 2 mol Reaktionswasser pro veresterter OH-Gruppe des Alkohols gebildet. Als Nebenprodukte können in diesem Fall auch Glutaminsäureester gebildet werden, die die erfindungsgemäße Verwendung der Pyroglutaminsäureester als Gashydratinhibitoren aber nicht stören.

Die erfindungsgemäßen Pyroglutaminsäureester können alleine oder in Kombination mit anderen bekannten Gashydratinhibitoren eingesetzt werden. Im Allgemeinen wird man dem zur Hydratbildung neigenden System soviel des erfindungsgemäßen Pyroglutaminsäureesters zusetzen, dass man unter den gegebenen Druck- und Temperaturbedingungen eine ausreichende Inhibierung erhält. Die erfindungsgemäßen Pyroglutaminsäureester werden im Allgemeinen vorzugsweise in Mengen zwischen 0,02 bis 1 Gew.-% (bezogen auf das Gewicht der wässrigen Phase) verwendet. Werden die erfindungsgemäßen Pyroglutaminsäureester in Mischung mit anderen Gashydratinhibitoren verwendet, so beträgt die Konzentration der Mischung 0,01 bis 2 bzw. 0,02 bis 1 Gew.-% in der wässrigen Phase.

Die Pyroglutaminsäureester werden vorzugsweise zur Anwendung als Gashydratinhibitoren in wassermischbaren alkoholischen Lösungsmitteln wie beispielsweise Methanol, Ethanol, Propanol, Butanol, Ethylenglykol sowie oxethylierten Monoalkoholen, wie Butylglykol, Isobutylglykol, Butyldiglykol gelöst.

### Beispiele

### Herstellung der Pyroglutaminsäureester

### Beispiel 1

### Herstellung von Pyroglutaminsäureisobutylester

In einem 500 ml Vierhalskolben mit Rührer, Thermometer, Stickstoffspülung sowie Rückflusskühler wurden 129 g Pyroglutaminsäure, 148 g Isobutanol sowie 1,5 g p-Toluolsulfonsäure vermischt und für 8 h bei 140°C unter Rückfluss erhitzt. Nach Abkühlen und Ersetzen des Rückflusskühlers durch eine Destillationsbrücke wurden innerhalb von 6 h bei 140°C ca. 110 ml Isobutanol-Wasser-Mischung abdestilliert. Dabei werden ca. 187 g Pyroglutaminsäureisobutylester mit einer Verseifungszahl von 305 mg KOH/g erhalten.

### Beispiel 2

### Herstellung von Pyroglutaminsäure-2-ethylhexylester

In einem 500 ml Vierhalskolben mit Rührer, Thermometer, Stickstoffspülung sowie Rückflusskühler wurden 129 g Pyroglutaminsäure, 195 g 2-Ethylhexanol sowie 2,0 g p-Toluolsulfonsäure vermischt und für 4 h bei 200°C unter Rückfluss erhitzt. Nach Abkühlen und Ersetzen des Rückflusskühlers durch eine Destillationsbrücke wurden innerhalb von 6 h bei 200°C ca. 96 ml 2-Ethylhexanol-Wasser-Mischung abdestilliert. Dabei werden ca. 243 g Pyroglutaminsäure-2-ethylhexylester mit einer Verseifungszahl von 233 mg KOH/g erhalten.

### Beispiel 3

### Herstellung von Glycerin-tri(pyroglutamat)

In einem 250 ml Vierhalskolben mit Rührer, Thermometer, Stickstoffspülung sowie Destillationsbrücke wurden 129 g Pyroglutaminsäure, 31 g Glycerin sowie 1,0 g p-Toluolsulfonsäure vermischt und auf 200°C erhitzt. Innerhalb von 12 h bei 200°C wurden ca. 18 ml Wasser abdestilliert. Dabei wurden ca. 143 g Glycerin-tri(pyroglutamat) mit einer Verseifungszahl von 397 mg KOH/g erhalten.

### Beispiel 4

### Herstellung von Pentaerythrit-di(pyroglutamat)

In einem 250 ml Vierhalskolben mit Rührer, Thermometer, Stickstoffspülung sowie Destillationsbrücke wurden 129 g Pyroglutaminsäure, 68 g Pentaerythrit sowie 1,0 g p-Toluolsulfonsäure vermischt und auf 200°C erhitzt. Innerhalb von 8 h bei 200°C wurden ca. 18 ml Wasser abdestilliert. Dabei wurden ca. 180 g Pentaerythrit-di(pyroglutamat) mit einer Verseifungszahl von 315 mg KOH/g erhalten.

### Beispiel 5

### Herstellung von Dipentaerythrit-tetra(pyroglutamat)

In einem 250 ml Vierhalskolben mit Rührer, Thermometer, Stickstoffspülung sowie Destillationsbrücke wurden 129 g Pyroglutaminsäure, 64 g Dipentaerythrit sowie 1,0 g p-Toluolsulfonsäure vermischt und auf 200°C erhitzt. Innerhalb von 10 h bei 200°C wurden ca. 18 ml Wasser abdestilliert. Dabei wurden ca. 176 g Dipentaerythrit-tetra(pyroglutamat) mit einer Verseifungszahl von 396 mg KOH/g erhalten.

### Beispiel 6

### Herstellung von Polyglycerin(n=20)-poly(pyroglutamat)

In einem 500 ml Vierhalskolben mit Rührer, Thermometer, Stickstoffspülung sowie Destillationsbrücke wurden 129 g Pyroglutaminsäure, 129 g Polyglycerin (Kondensationsgrad n = 20) sowie 1,0 g p-Toluolsulfonsäure vermischt und auf 200°C erhitzt. Innerhalb von 16 h bei 200°C wurden ca. 18 ml Wasser abdestilliert. Dabei wurden ca. 240 g Polyglycerin(n=20)-poly(pyroglutamat) mit einer Verseifungszahl von 235 mg KOH/g erhalten.

### Beispiel 7

### Herstellung von Polyglycerin(n=40)-poly(pyroglutamat)

In einem 500 ml Vierhalskolben mit Rührer, Thermometer, Stickstoffspülung sowie Destillationsbrücke wurden 129 g Pyroglutaminsäure, 86 g Polyglycerin (Kondensationsgrad n = 40) sowie 1,0 g p-Toluolsulfonsäure vermischt und auf 200°C erhitzt. Innerhalb von 20 h bei 200°C wurden ca. 18 ml Wasser abdestilliert. Dabei wurden ca. 197 g Polyglycerin(n=40)-poly(pyroglutamat) mit einer Verseifungszahl von 283 mg KOH/g erhalten.

### Wirksamkeit der Polymere als Gashydratinhibitoren

Zur Untersuchung der inhibierenden Wirkung der Polyester wurde ein Stahlrührautoklav mit Temperatursteuerung, Druck- und Drehmomentaufnehmer mit 450 ml Innenvolumen benutzt. Für Untersuchungen zur kinetischen Inhibierung wurde der Autoklav mit destillierten Wasser und Gas im Volumenverhältnis 20:80 gefüllt, für Untersuchungen der Agglomeratinhibierung wurde zusätzlich Kondensat zugegeben. Anschließend wurden 50 bar Erdgas aufgedrückt.

Ausgehend von einer Anfangstemperatur von 20°C wurde innerhalb 3 h auf 4°C abgekühlt, dann 18 h bei 4°C gerührt und innerhalb von 2 h wieder auf 20°C aufgeheizt. Dabei wird zunächst eine Druckabnahme gemäß der thermischen Kompression des Gases beobachtet. Tritt während der Unterkühlzeit die Bildung von Gashydratkeimen auf, so verringert sich der gemessene Druck, wobei ein Anstieg des gemessenen Drehmoments und ein leichter Anstieg der Temperatur zu beobachten ist. Weiteres Wachstum und zunehmende Agglomeration der Hydratkeime führt ohne Inhibitor schnell zu einem weiteren Anstieg des Drehmomentes. Beim Aufwärmen des Gemisches zerfallen die Gashydrate, so dass man den Anfangszustand der Versuchsreihe erreicht.

Als Maß für die inhibierende Wirkung des Polymers wird die Zeit vom Erreichen der Minimaltemperatur von 4°C bis zur ersten Gasaufnahme (T_{ind}) bzw. die Zeit bis zum Anstieg des Drehmomentes (T_{agg}) benutzt. Lange Induktionszeiten bzw. Agglomerationszeiten weisen auf eine Wirkung als kinetischer Inhibitor hin. Das im Autoklaven gemessene Drehmoment dient dagegen als Größe für die Agglomeration der Hydratkristalle. Bei einem guten Antiagglomerant ist das Drehmoment, das sich nach Bildung von Gashydraten aufbaut, gegenüber dem Blindwert deutlich verringert. Im Idealfall bilden sich schneeartige, fein-verteilte Hydratkristalle in der Kondensatphase, die sich nicht zusammenlagern und somit nicht zum Verstopfen der zum Gastransport und zur Gasförderung dienenden Installationen führen.

### Testergebnisse

Zusammensetzung des verwendeten Erdgases:
Methan 84,8 %, Ethan 9,2 %, Propan 2,6 %, Butan 0,9 %, Kohlendioxid 1,6 %, Stickstoff 0,9 %.

Als Vergleichssubstanz wurde ein kommerziell erhältlicher Gashydratinhibitor auf Basis Polyvinylpyrrolidon verwendet. Die Dosierrate betrug bei allen Versuchen 5000 ppm bezogen auf die Wasserphase.

| Pyroglutaminsäureester aus Beispiel | T_{ind}(h) | T_{agg}(h) |
|---|---|---|
| Blindwert | 0 | 0 |
| 1 | 6,2 | 6,5 |
| 2 | 5,9 | 6,0 |
| 3 | 7,5 | 7,8 |
| 4 | 7,2 | 7,3 |
| 5 | 8,4 | 8,9 |
| 6 | 8,1 | 8,2 |
| 7 | 8,0 | 8,1 |
| Vergleich | 3,5 | 3,6 |

Wie aus den obigen Testresultaten zu erkennen ist, wirken die erfindungsgemäßen Pyroglutaminsäureester als kinetische Gashydratinhibitoren und zeigen eine deutliche Verbesserung gegenüber dem Stand der Technik.

Um die Wirkung als Agglomeratinhibitoren zu prüfen, wurde im oben verwendeten Testautoklaven Wasser und Testbenzin vorgelegt (20 % des Volumens im Verhältnis 1:2) und bezogen auf die Wasserphase 5000 ppm des jeweiligen Additivs zugegeben.
Bei einem Autoklavendruck von 50 bar und einer Rührgeschwindigkeit von 500 U/min wurde die Temperatur von anfangs 20°C innerhalb 3 Stunden auf 4°C abgekühlt, dann 18 Stunden bei 4°C gerührt und wieder aufgewärmt. Dabei wurden die Agglomerationszeit bis zum Auftreten von Gashydrat-Agglomeraten und das dabei auftretende Drehmoment am Rührer gemessen, das ein Maß für die Agglomeration der Gashydrate ist.

Als Vergleichssubstanz wurde ein kommerziell erhältlicher Anti-Agglomerant (quartäres Ammoniumsalz) herangezogen.

| Pyroglutaminsäureester aus Beispiel | T_{agg}(h) | Mₘₐₓ(Ncm) |
|---|---|---|
| Blindwert | 0,1 | 15,9 |
| 1 | 4,5 | 1,4 |
| 2 | 3,8 | 1,0 |
| 3 | 5,7 | 2,3 |
| Vergleich | 2,6 | 4,1 |

Wie aus diesen Beispielen zu ersehen ist, sind die gemessenen Drehmomente im Vergleich zum Blindwert trotz Gashydratbildung stark reduziert. Dies spricht für eine deutliche agglomerat-inhibierende Wirkung der erfindungsgemäßen Produkte. Zusätzlich weisen die Produkte unter den Versuchsbedingungen auch eine deutliche Wirkung als kinetische Inhibitoren auf. Sämtliche Beispiele zeigen eine deutlich bessere Performance als der kommerziell erhältliche Anti-Agglomerant (Vergleich = Stand der Technik).

Im Folgenden wird die deutlich verbesserte biologische Abbaubarkeit (nach OECD 306) der erfindungsgemäßen Verbindungen im Vergleich zum Stand der Technik (kommerziell erhältliches Polyvinylpyrrolidon) aufgezeigt.

| Pyroglutaminsäureester aus Beispiel | Biologische Abbaubarkeit 28 Tage (OECD 306) |
|---|---|
| Polyvinylpyrrolidon | 5 |
| 1 | 65 |
| 2 | 48 |
| 3 | 62 |
| 4 | 70 |
| 5 | 71 |
| 6 | 35 |
| 7 | 24 |

## Patentansprüche

1. Verwendung von Pyroglutaminsäureestern, darstellbar durch Veresterung von mindestens einem Alkohol mit 1 bis 100 Hydroxylgruppen mit Pyroglutaminsäure und/oder Glutaminsäure, mit der Maßgabe, dass der Alkohol höchstens eine Estergruppe oder höchstens eine Carbonsäuregruppe umfasst, in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

2. Verwendung gemäß Anspruch 1, worin der Alkohol der Formel (1) aus Methanol, Ethanol, Propanol, Butanol, Pentanol, Isopropanol, Isobutanol, Isopentanol, 2-Ethylhexanol, Heptanol, Octanol, Decanol, Ethylenglykol, Propylenglykol, Glycerin, Diglycerin, Triglycerin, Tetraglycerin, Trimethylolpropan, Pentaerythrit, Dipentaerythrit, Tripentaerythrit, Sorbitol, Sorbitan, Diethylenglykol, Triethylenglykol, Propylenglykol, Dipropylenglykol und Tripropylenglykol ausgewählt ist.

3. Verwendung gemäß der Ansprüche 1 und/oder 2, wobei zur Herstellung der Pyroglutaminsäureester L-Glutaminsäure in enantiomerenreiner Form verwendet wird.

4. Verwendung gemäß einem oder mehreren der Ansprüche 1 bis 3, wobei der Pyroglutaminsäureester Glutaminsäureester enthält.

5. Verwendung gemäß einem oder mehreren der Ansprüche 1 bis 4, wobei der Alkohol der Formel (1) entspricht 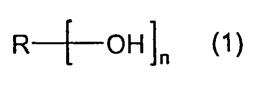 worin R für einen beliebig substituierten organischen Rest steht, der höchstens eine Estergruppe oder höchstens eine Carbonsäuregruppe umfasst, und n für eine Zahl von 1 bis 100 steht.

6. Verwendung gemäß Anspruch 5, wobei R für einen Alkyl- oder Polyalkylenoxid-Rest mit 1 bis 30 Kohlenstoffatomen steht.

7. Verwendung gemäß Anspruch 5 und/oder 6, wobei n für eine Zahl von 1 bis 10 steht.

8. Verwendung gemäß einem oder mehreren der Ansprüche 1 bis 7, wobei im Ester mindestens 30% aller im Alkohol vorhandenen OH-Gruppen verestert sind.

## Claims

1. The use of pyroglutamic esters, preparable by esterifying at least one alcohol having from 1 to 100 hydroxyl groups with pyroglutamic acid and/or glutamic acid, with the proviso that the alcohol comprises at most one ester group or at most one carboxylic acid group, in amounts of from 0.01 to 2% by weight for preventing the formation of gas hydrates in aqueous phases which are in contact with a gaseous, liquid or solid organic phase.

2. The use as claimed in claim 1, in which the alcohol of the formula (1) is selected from methanol, ethanol, propanol, butanol, pentanol, isopropanol, isobutanol, isopentanol, 2-ethylhexanol, heptanol, octanol, decanol, ethylene glycol, propylene glycol, glycerol, diglycerol, triglycerol, tetraglycerol, trimethylolpropane, pentaerythritol, dipentaerythritol, tripentaerythritol, sorbitol, sorbitan, diethylene glycol, triethylene glycol, propylene glycol, dipropylene glycol and tripropylene glycol.

3. The use as claimed in claim 1 and/or 2, wherein the pyroglutamic esters are prepared by using L-glutamic acid in enantiomerically pure form.

4. The use as claimed in one or more of claims 1 to 3, wherein the pyroglutamic ester comprises glutamic esters.

5. The use as claimed in one or more of claims 1 to 4, wherein the alcohol corresponds to the formula (1) 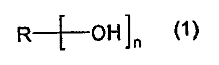 in which R is an organic radical with any substitution which comprises at most one ester group or at most one carboxylic acid group, and n is from 1 to 100.

6. The use as claimed in claim 5, wherein R is an alkyl or polyalkylene oxide radical having from 1 to 30 carbon atoms.

7. The use as claimed in claim 5 and/or 6, wherein n is from 1 to 10.

8. The use as claimed in one or more of claims 1 to 7, wherein, in the ester, at least 30% of all the OH groups present in the alcohol have been esterified.

## Revendications

1. Utilisation d'esters de l'acide pyroglutamique, pouvant être préparés par estérification d'au moins un alcool présentant 1 à 100 groupes hydroxyle avec de l'acide pyroglutamique et/ou de l'acide glutamique, à condition que l'alcool comprenne au plus un groupe ester ou au plus un groupe acide carboxylique, en des quantités de 0,01 à 2% en poids pour empêcher la formation d'hydrates gazeux dans des phases aqueuses, qui sont associées à une phase organique gazeuse, liquide ou solide.

2. Utilisation selon la revendication 1, où l'alcool de formule (1) est choisi parmi le méthanol, l'éthanol, le propanol, le butanol, le pentanol, l'isopropanol, l'isobutanol, l'isopentanol, le 2-éthylhexanol, l'heptanol, l'octanol, le décanol, l'éthylèneglycol, le propylèneglycol, le glycérol, le diglycérol, le triglycérol, le tétraglycérol, le triméthylolpropane, le pentaérythritol, le dipentaérythritol, le tripentaérythritol, le sorbitol, le sorbitane, le diéthylèneglycol, le triéthylèneglycol, le propylèneglycol, le dipropylèneglycol et le tripropylèneglycol.

3. Utilisation selon les revendications 1 et/ou 2, où on utilise pour la préparation des esters de l'acide pyroglutamique de l'acide L-glutamique sous une forme énantiomère pure.

4. Utilisation selon l'une ou plusieurs des revendications 1 à 3, où l'ester de l'acide pyroglutamique contient un ester de l'acide glutamique.

5. Utilisation selon l'une ou plusieurs des revendications 1 à 4, où l'alcool correspond à la formule (1) 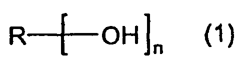 où R représente un radical organique substitué de manière quelconque, qui comprend au plus un groupe ester ou au plus un groupe acide carboxylique et n représente un nombre de 1 à 100.

6. Utilisation selon la revendication 5, où R représente un radical oxyde d'alkylène ou poly(oxyde d'alkylène) comprenant 1 à 30 atomes de carbone.

7. Utilisation selon la revendication 5 et/ou 6, où n représente un nombre de 1 à 10.

8. Utilisation selon l'une ou plusieurs des revendications 1 à 7, où, dans l'ester, au moins 30% de tous les groupes OH présents dans l'alcool sont estérifiés.
